# EUROPÄISCHE PATENTANMELDUNG

(11) **EP 3 992 318 A1**
(43) Veröffentlichungstag der Anmeldung: **04.05.2022**
(21) Anmeldenummer: 20204610.8
(22) Anmeldetag: 29.10.2020
(51) Int. Cl.: C22C 9/04, C22F 1/08

(54) **LEGIERUNGSPRODUKT HERGESTELLT AUS EINER BLEIFREIEN KUPFER-ZINK-LEGIERUNG UND VERFAHREN FÜR DESSEN HERSTELLUNG**

(71) Anmelder: Otto Fuchs - Kommanditgesellschaft -, 58540 Meinerzhagen (DE)
(72) Erfinder: REETZ, Björn, 47800 Krefeld (DE); MÜNCH, Tileman, 41751 Viersen (DE); PLETT, Thomas, 57392 Schmallenberg (DE)
(74) Vertreter: Haverkamp Patentanwälte PartG mbB

(57) **Zusammenfassung**

Die Erfindung betrifft einen Legierungsprodukt aus einer bleifreien Kupfer-Zink-Legierung, bestehend aus (Angaben in Gew.-%):

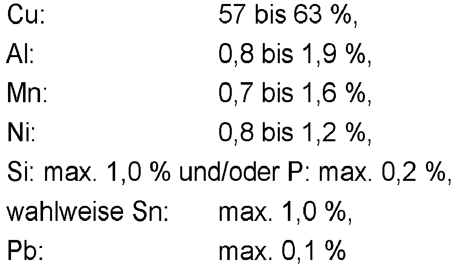

Rest Zn und unvermeidbare Verunreinigungen, undwobei das Legierungsprodukt nach einer thermischen Behandlung der Kupfer-Zink-Legierung ein Legierungsgefüge aufweist, das aus β-Gefüge oder einem primären β-Gefüge mit α-Phasenanteilen besteht, und
wobei im Legierungsgefüge Phasenausscheidungen erster Art mit Silizium und Mangan enthaltenden Verbindungen und/oder Phasenausscheidungen zweiter Art mit Phosphor, Mangan und Nickel enthaltenden Verbindungen vorliegen.

## Beschreibung

Die Erfindung betrifft einen Legierungsprodukt aus einer Kupfer-Zink-Legierung, die Phasenausscheidungen aufweist. Des Weiteren wird ein Herstellungsverfahren für einen Legierungsprodukt aus einer solchen Kupfer-Zink-Legierung beschrieben.

Bleihaltiges Sondermessing mit Nickel, Mangan und Aluminium ist beispielsweise durch die Normlegierung CuZn35Ni3Mn2AlPb (Werkstoffnummer CW710R nach DIN EN 1412) bekannt, die 58 bis 60 Gew.-% Kupfer, 2 bis 3 Gew.-% Nickel, 1,5 bis 2,5 Gew.-% Mangan, 0,3 bis 1,3 Gew.-% Aluminium und einen Bleianteil von 0,2 bis 0,8 Gew.-% aufweist. Mögliche Wahlbestandteile stellen Eisen, Silizium und Zinn dar. Zink bildet den Rest.

Für gleitbeanspruchte Bauteile wurden bleireduzierte Kupfer-Zink-Legierungen vorgeschlagen, die Phasenausscheidungen in der Form von Mangansiliziden aufweisen. Diese verleihen dem Legierungsprodukt eine hohe Beständigkeit gegen abrasiven Verschleiß und verringern die Neigung zur lokalen Adhäsion an den Gleitflächen. Derartige Legierungen weisen vielfach ein Gefüge mit überwiegend β-Phase oder eine heterogene Matrix mit α-und β-Phasen auf.

Ein hoher β-Phasenanteil wirkt sich jedoch bei einer Kupfer-Zink-Legierung nachteilig auf die Kaltumformbarkeit aus. Um dem entgegenzuwirken, wird in DE 10 2007 029 991 B4 vorgeschlagen, das Legierungsprodukt mit einem Gefüge auszubilden, in dem Eisen und Nickel enthaltende Mangansilizide vorliegen und das eine α-Matrix aufweist, in die 5 Vol.-% bis 50 Vol.-% β-Phase eingelagert ist.

Des Weiteren wird durch EP 3 272 888 A1 ein Messing-Legierungsprodukt offenbart, das hohe Kaltumformgrade ohne Zwischenglühen ermöglicht. Mit einem begrenzten Zinkgehalt von 21 bis 27 Gew.-% resultiert eine α-Matrix, wobei durch die Zulegierung von Silizium, Mangan und Phosphor Phasenausscheidungen entstehen und insbesondere manganhaltigen Phosphide mit einer perlenschnurartigen Anordnung im Legierungsgefüge vorliegen.

DE 36 26 435 A1 offenbart eine Kupfer-Zink-Legierung mit 66 bis 90 Gew.-% Kupfer, 1,5 bis 8,0 Gew.-% Mangan, 0,3 bis 7,0 Gew.-% Aluminium, 0,3 bis 2,0 Gew.-% Phosphor, Rest Zink. Bei einem hinreichend hohen Aluminiumanteil liegen innerhalb einer α-Matrix als Verschleißminderer wirkende Manganphosphide im Wesentlichen in eutektischer Verteilung vor, die kleiner als primär ausgeschiedene Phosphide sind und aufgrund dessen die Kaltumformbarkeit nicht negativ beeinflussen.

Der Erfindung liegt die Aufgabe zugrunde, ein Legierungsprodukt aus einer Kupfer-Zink-Legierung mit Phasenausscheidungen für eine breite Prozessbandbreite und vereinfachter Einstellbarkeit anzugeben. Das Legierungsprodukt sollte sich durch hohe Festigkeit und Härte sowie eine gute Korrosionsbeständigkeit und eine verbesserte Recyclingeignung auszeichnen. Des Weiteren ist die Kupfer-Zink-Legierung bleifrei einzustellen, wobei das resultierende Legierungsprodukt eine gute Zerspanbarkeit und Beschichtbarkeit aufweisen sollte. Ferner ist ein Herstellungsverfahren für das Legierungsprodukt anzugeben.

Diese Aufgabe wird durch das in Anspruch 1 genannten Legierungsprodukt gelöst. Vorteilhafte Ausgestaltungen ergeben sich aus den Unteransprüchen und Anspruch 15 behandelt ein Herstellungsverfahren für das Legierungsprodukt.

Die Erfinder haben eine Zusammensetzung für eine Kupfer-Zink-Legierung gefunden, die zur Herstellung eines Legierungsprodukts unterschiedlichen Herstellungsprozessen unterzogen werden kann und die Ausbildung verschiedener Phasenausscheidungen ermöglicht. Dabei ist insbesondere eine gute Warmumformbarkeit und eine hinreichende Kaltumformbarkeit gegeben, wobei die thermische Behandlung zur Herstellung des Legierungsprodukts bevorzugt mindestens eine Warmumformung in Kombination mit einem abschließenden Entspannungsglühen oder eine Kombination aus Warmumformung und Kaltumformung umfasst. Für Letzteres kann vor der Kaltumformung ein Zwischenglühen ausgeführt werden. Des Weiteren schließt bevorzugt ein Entspannungsglühen an eine Kaltumformung an.

Für das erfindungsgemäße Legierungsprodukt wird eine Kupfer-Zink-Legierung verwendet, die nach einer thermischen Behandlung ein Legierungsgefüge aufweist, das im Wesentlichen aus β-Gefüge oder einem primären β-Gefüge mit α-Phasenanteilen besteht. Vorliegend wird eine β'-Phase dem β-Phasenanteil zugerechnet. Für die β-Phase des Legierungsprodukts ist ein Gefügeanteil von mehr als 45 Vol.-% und insbesondere mehr als 50 Vol.-% bevorzugt. Der Anteil der α-Phase im Legierungsprodukt beträgt vorteilhafterweise mindestens 15 Vol.-% und bevorzugt mindestens 30 Vol.-%.

Die erfindungsgemäße bleifreie Kupfer-Zink-Legierung besteht aus (Angaben in Gew.-%):

| | |
|---|---|
| Cu: | 57 bis 63 %, |
| Al: | 0,8 bis 1,9 %, |
| Mn: | 0,7 bis 1,6 %, |
| Ni: | 0,8 bis 1,2 %, |
| Si: max. 1,0 % und/oder P: max. | 0,2 %, |
| wahlweise Sn: | max. 1,0 %, |
| Pb: | max. 0,1 % |

Rest Zn und unvermeidbare Verunreinigungen.

Wenn im Rahmen dieser Ausführung von unvermeidbaren Verunreinigungen die Rede ist, betragen diese pro Element maximal 0,05 Gew.-% und in der Summe der unvermeidbaren Verunreinigungen nicht mehr als 0,15 Gew.-%.

Bleifrei wird im Rahmen dieser Ausführung eine Kupfer-Zink-Legierung bezeichnet, die einen Bleianteil von maximal 0,1 Gew.-% enthält. Insofern wird ein Bleigehalt bis zu 0,1 Gew.-% in der Legierung toleriert.

Der Gehalt für Kupfer von 57 bis 63 Gew.- % und besonders bevorzugt von 58 bis 62 Gew.-% ist für die Gefügeeinstellung wesentlich. Dabei ist zu berücksichtigen, dass sich die zusätzlich zu Zink als Rest als zwingend festgelegten Legierungsbestandteile Aluminium mit einem Zinkäquivalent von 6,0 zu einen und Mangan (Zinkäquivalent 0,5) sowie Nickel (Zinkäquivalent -0,9 bis -1,5) zum anderen im Hinblick auf die Phaseneinstellung gegenläufig verhalten. Bei den angegebenen Faktoren zum Bestimmen des Zink-äquivalentes handelt es sich um die Faktoren nach Guillet. Mit den erfindungsgemäßen Anteilen für Aluminium von 0,8 bis 1,9 % und besonders bevorzugt von 0,85 bis 1,85 %, für Mangan von 0,7 bis 1,6 % und besonders bevorzugt von 0,8 bis 1,5 % sowie für Nickel von 0,8 bis 1,2 % und besonders bevorzugt von 0,9 bis 1,1 % resultiert das voranstehend genannte Legierungsgefüge, das sowohl eine Warmumformung als auch eine für etliche Anwendungen hinreichende Kaltumformung zulässt, insbesondere auch ohne dass ein Zwischenglühen erforderlich ist.

Die Warmumformung wird bevorzugt als Strangpressen nach dem Schmelzen und Gießen ausgeführt. Eine Alternative stellt Warmwalzen oder ein Schmiedeverfahren dar. Die erfindungsgemäße Kupfer-Zink-Legierung weist nach dem Gießen einen β-Phasenanteil von ≥ 30 Vol.-% für eine Temperatur oberhalb von 550°C und bevorzugt oberhalb von 400°C auf, sodass eine gute Warmumformbarkeit begeben ist. Der β-Phasenanteil für die Warmumformung beträgt bevorzugt mindestens 50 Vol.-%. Die genannten Temperaturen stellen Mindestwerte dar, wobei für die Warmumformung typischerweise höhere Umformtemperaturen verwendet werden können. Bevorzugt liegen die Schmiedetemperaturen über 500°C und die Strangpresstemperaturen über 650°.

Eine Kaltumformung des durch Strangpressen oder Warmwalzen erzeugten Legierungsproduktes (Halbzeuges) führt zu einer verbesserten Oberflächengüte. Des Weiteren kann damit eine Anpassung der Abmessungen der Rohlinge, bei Stangenmaterial insbesondere im Hinblick auf Geradheit und Rundheit, vorgenommen werden, sodass nachfolgende Zerspanungsschritte weniger aufwendig sind. Ein weiterer wesentlicher Vorteil einer Kaltumformung stellt die Verbesserung der Materialeigenschaften dar, wobei neben einer Verbesserung der Zugfestigkeit vor allem eine Erhöhung der Dehngrenze angestrebt wird, die wesentlich die mikroplastische Verformung und damit die Verschleißfestigkeit beeinflusst. Erreicht werden kann dieses durch Ziehen des Legierungsproduktes.

Für die Kaltumformung liegt der α-Phasenanteil der erfindungsgemäßen Kupfer-Zink-Legierung bevorzugt bei 10 - 50 Vol.-% und besonders bevorzugt bei 25 - 40 Vol.-%. Für besonders ökonomisch kaltumformbare Varianten weist das Legierungsgefüge den geforderten α-Phasenanteil bereits nach der Warmumformung auf, sodass der Kaltumformschritt unmittelbar nachgeschaltet werden kann. Alternativ wird vor der Kaltumformung ein Zwischenglühen zu Erhöhung des α-Phasenanteils eingesetzt, das typischerweise bei Temperaturen zwischen 400 und 500°C für 3 bis 6 Stunden ausgeführt wird. Des Weiteren wird die Kaltumformung bevorzugt mit einer prozentualen Verformung von 7 bis 25 % und besonders bevorzugt von 9 bis 18 % ausgeführt, wodurch insbesondere die Zugfestigkeit und Härte der Kupfer-Zink-Legierung erhöht wird. Vorliegend ist die prozentuale Verformung als Querschnittsänderung beim Ziehen in Relation zum Ausgangsquerschnitt definiert. Durch einen bevorzugt der Kaltumformung nachgeschaltetes Entspannungsglühen wird zusätzlich zur Verringerung der Neigung zur Spannungsrisskorrosion die Duktilität gesteigert. Des Weiteren nimmt mit dem Abbau der Spannungen im Legierungsgefüge die Dehnung etwas zu, wobei die vorteilhaft eingestellte Zugfestigkeit und Härte grundsätzlich erhalten bleiben. Darüber hinaus dient das Entspannungsglühen zur finalen Einstellung der Phasenanteile im Gefüge und die darin auftretenden Phasenausscheidungen.

Somit kann mit ein und derselben Legierung allein durch Variation der daran beteiligten Legierungselemente und die Prozessführung das Gefüge in dem Legierungsprodukt, den jeweiligen Anforderungen entsprechend, eingestellt werden. Steht ein Warmumformen des Legierungsproduktes im Vordergrund, wird man ein Gefüge mit einem höheren β-Phasenanteil vorsehen. Steht hingegen neben der Warmumformung auch eine Kaltumformung an, wird man die Legierungszusammensetzung so einstellen, dass in einem primären β-Phasengefüge α-Phasenanteile ausgeschieden sind. Von Bedeutung ist, dass unterschiedliche Gefüge mit den ohnehin üblichen Verfahrensschritten eingestellt werden können und bestehende Anlagen zum Herstellen derartiger Legierungsprodukte nicht geändert werden müssen.

Der Aluminiumanteil in der Legierung wirkt festigkeitssteigernd, verbessert die Oberflächenqualität und verringert die Neigung zur Erosionskorrosion, insbesondere in einer Meerwasserumgebung. Mangan und Nickel sind vorteilhaft für die mechanischen Eigenschaften und verbessern ebenfalls das Korrosionsverhalten. Ferner verbessert Nickel das Formänderungsvermögen dieser Kupfer-Zink-Legierung. Für die erfindungsgemäße Legierungszusammensetzung hat sich zusätzlich und überraschend ergeben, dass für die gewählten Anteile der Begleitelemente Aluminium, Mangan und Nickel und das ausgewählte Kupfer-Zinkverhältnis unterschiedliche Phasenausscheidungen in einem weiten Bereich gezielt einstellbar sind, ohne die Warm- und Kaltumformbarkeit wesentlich zu beeinflussen. Dabei werden als weiteres Merkmal des erfindungsgemäßen Legierungsprodukts im Legierungsgefüge Phasenausscheidungen erster Art mit Silizium und Mangan enthaltenden Verbindungen und/oder Phasenausscheidungen zweiter Art mit Phosphor, Mangan und Nickel enthaltenden Verbindungen angelegt. Zur Anpassung an den jeweiligen Anwendungszweck ist innerhalb der Anteilsspannen der erfindungsgemäßen Kupfer-Zink-Legierung eine Einstellung beider Arten von Phasenausscheidungen möglich. Dabei können Hartphasen unterschiedlicher Größe und zusätzlich oder alternativ feine Phasenausscheidungen zur Festigkeitssteigerung eingestellt werden.

Die Phasenausscheidungen erster Art stellen Primärkristalle dar, die aus manganhaltigen Siliziden bestehen, wobei mittels der Anteile für Silizium und für die Begleitelemente die Größe und Form der Silizide einstellbar sind. Bei höheren Anteilen der Begleitelemente bilden sich größere Silizide aus, die insbesondere Hartphasen bilden. Für eine alternative Ausführung können die Legierungszusammensetzung und die thermische Behandlung so gewählt werden, dass Silizide in Form feiner Phasenausscheidungen vorliegen, die insbesondere die Festigkeit und die thermische Stabilität des Legierungsprodukts steigern. Des Weiteren können zusätzlich Aluminium und Nickel in die intermetallischen Phasenausscheidungen erster Art eingelagert sein.

Diese Phasenausscheidungen erster Art dienen zur Verbesserung der Verschleißbeständigkeit des Legierungsprodukts und verringern insbesondere abrasiven Materialabtrag und wirken punktuellen Verschweißungen an Gleitflächen entgegen. Die manganhaltigen Silizide können im Wesentlichen aus Mn₅Si₃ bestehen und in Form hexagonaler Hohlprismen ausgebildet sein. Neben stängeligen Formen sind kugelige oder plättchenförmige Strukturen und Mischungen aus den genannten Formen möglich. Mittels des Siliziumgehalts wird die Menge der Phasenausscheidungen erster Art gesteuert. Verwendet wird ein Siliziumanteil von maximal 1,0 % und bevorzugt ist ein Siliziumanteil von 0,05 bis 0,9 Gew.-.%. Geringere Siliziumanteile vermögen nicht eine hinreichende Menge an Siliziden bereitzustellen. Höhere Siliziumanteile wirken sich negativ auf die Zerspanbarkeit aus.

Die Phasenausscheidungen zweiter Art mit Phosphor, Mangan und Nickel enthaltenden Verbindungen führen zu im Legierungsgefüge fein ausgebildeten Phosphiden, die bei dieser Legierung als Spanbrecher dienen. Damit ist eine Legierung zum Herstellen eines Legierungsproduktes bereitgestellt, welches gut maschinell (zerspanend) bearbeitbar ist. Die Wirkung des Phosphors reicht damit über die Schmelzverflüssigung und Kornfeinung hinaus, wobei angenommen wird, dass durch die thermische Behandlung der Kupfer-Zink-Legierung zusätzliche Phasenausscheidungen zweiter Art entstehen, die besonders fein verteilt sind und festigkeitssteigernd wirken. Des Weiteren hat sich zu deren Stabilisierung der gewählte Aluminiumanteil in der Spanne von 0,8 bis 1,9 Gew.-% als wirkungsvoll erwiesen. Geringere Aluminiumanteile führen nicht zu dem gewünschten Zweck. Höhere Aluminiumanteile haben Nachteile hinsichtlich des Gefüges.

Untersuchungen des Legierungsgefüges ergaben eine gleichmäßige Verteilung der Phosphide in der Matrix, wobei die einzelnen Partikel überwiegend klein und kompakt sind. Unter Annahme einer kugeligen bzw. globularen Form lag die Größe von mindestens 85 Gew.-% der Phosphidpartikel unterhalb 2 µm. Des Weiteren ergaben Analysen für die Phosphide eine Massenverhältnis Mangan zu Phosphor von etwa 2,5 bis 3,5. Durch den zusätzlichen Einbau von Nickel in die Phosphide konnte eine Festigkeitssteigerung des resultierenden Legierungsprodukts beobachtet werden. Der Phosphoranteil in der Kupfer-Zink-Legierung beträgt maximal 0,2 Gew.-%, wobei ein Phosphorgehalt von 0,02 bis 0,15 Gew.-% bevorzugt ist. Stehen spanbrechende Eigenschaften bei dem herzustellenden Legierungsprodukt im Vordergrund, wird man den Phosphorgehalt mit 0,1 Gew.-% oder mehr einstellen.

Für eine vorteilhafte Ausführung liegen im Legierungsgefüge die Phasenausscheidungen erster Art mit Silizium und Mangan enthaltenden Verbindungen und die Phasenausscheidungen zweiter Art mit Phosphor, Mangan und Nickel enthaltenden Verbindungen vor. Damit lassen sich insbesondere der Verschleißgrad, die Festigkeit und die maschinelle Bearbeitbarkeit des Legierungsprodukts gezielt und über einen breiten Bereich unabhängig voneinander an die jeweilige Anwendung anpassen. Dabei werden die Begleitelemente so aufeinander abgestimmt, dass der Siliziumanteil nicht zu viel Mangan und Nickel in den Phasenausscheidungen erster Art bindet und eine genügende Anzahl von Phasenausscheidungen zweiter Art vorliegt.

Zinn stellt für die Kupfer-Zink-Legierung einen Wahlbestandteil dar, wobei dessen maximaler Anteil 1,0 Gew.-% nicht überschreitet. Der Vorteil eines Zinnzusatzes wird in der weiteren Verbesserung des Korrosionswiderstands gesehen. Des Weiteren hat Zinn einen positiven Einfluss auf die Festigkeits- und Geleiteigenschaften und trägt zu einer Deckschichtbildung bei. Bevorzugt wird daher einen Zinngehalt von 0,05 bis 0,9 Gew.-%. Steht bei dem herzustellenden Legierungsprodukt wiederum eine gute Zerspanbarkeit im Raum, wird man den Zinngehalt mit mehr als 0,5 Gew.-% einstellen.

Für das erfindungsgemäße Legierungsprodukt hat sich erwiesen, dass die Kombination aus dem gewählten Kupfer-Zinkverhältnis und den Intervallen für die Begleitelemente Aluminium, Mangan und Nickel sowie den Elementen für die beiden Phasenausscheidungsarten, Silizium und/oder Phosphor, zu einer Basislegierung mit einer überraschend guten Einstellbarkeit über einen weiten Bereich führt. Dies erlaubt eine gute Anpassbarkeit und ermöglicht ein breites Anwendungsfeld mit hohen Anforderungen an den Korrosionsschutz, den Verschleiß, die Oberflächengüte und Beschichtbarkeit sowie gute mechanische Eigenschaften im Hinblick auf die Härte und Festigkeit. Des Weiteren ist das Legierungsprodukt aufgrund seiner Zusammensetzung gut recyclingfähig.

Des Weiteren ermöglicht das Legierungsprodukt Variationen innerhalb der vorgegebenen Zusammensetzung. Dabei werden für eine bevorzugte erste Variante, die auf eine besonders gute Warmumformbarkeit bei noch hinreichender Kaltumformbarkeit abzielt, der Aluminiumgehalt auf ≥ 1,45 Gew.-% und der Mangangehalt ≥ 0,95 Gew.-% festgelegt. Mit den weiteren erfindungsgemäßen Bestandteilen resultiert ein Legierungsprodukt, das sich durch eine hohe Festigkeit und Härte sowie einen guten Korrosionsschutz auszeichnet.

Für eine bevorzugte zweite Variante, die auf eine bessere Kaltumformbarkeit bei noch hinreichender Warmumformbarkeit abzielt, betragen die Anteile für Aluminium ≤ 1,25 Gew.-% und für Mangan ≤ 0,85 Gew.-%. Mit diesen Obergrenzen resultiert ein Legierungsprodukt, das zusätzlich zu den voranstehend genannten Vorteilen der ersten Variante eine gute Beschichtbarkeit aufweist sowie Phasenausscheidungen, die besonders fein angelegt sind. Vorteilhaft sind insbesondere als kleine Partikel ausgebildete Phasenausscheidungen zweiter Art, die zu einer guten Zerspanbarkeit führen.

Die in nachstehender Tabelle 1 angeführten Ausführungsbeispiele Leg. 1 - Leg. 5 betreffen die bevorzugte erste Variante und Leg. 6 - Leg. 10 sind Ausgestaltungen der bevorzugten zweiten Variante.

**Tabelle 1 (Angaben in Gew.-%)**

| | **Cu** | **Al** | **Mn** | **Ni** | **Si** | **Sn** | **P** | **Zn** |
|---|---|---|---|---|---|---|---|---|
| **Leg. 1** | 60 | 1,8 | 1 | 1 | 0,8 | - | - | 35,4 |
| **Leg. 2** | 60 | 1,8 | 1 | 1 | 0,8 | 0,8 | - | 34,6 |
| **Leg. 3** | 62 | 1,8 | 1 | 1 | 0,8 | 0,8 | 0,12 | 32,48 |
| **Leg. 4** | 58 | 1,8 | 1,5 | 1 | 0,8 | 0,8 | 0,12 | 35,98 |
| **Leg. 5** | 60 | 1,8 | 1,5 | 1 | - | 0,3 | 0,12 | 35,28 |
| **Leg. 6** | 60 | 0,9 | 0,8 | 1 | 0,8 | - | - | 36,5 |
| **Leg. 7** | 60 | 0,9 | 0,8 | 1 | 0,8 | 0,8 | - | 35,7 |
| **Leg. 8** | 62 | 0,9 | 0,8 | 1 | 0,8 | 0,8 | 0,12 | 33,58 |
| **Leg. 9** | 58 | 0,9 | 0,8 | 1 | 0,8 | 0,8 | 0,12 | 37,58 |
| **Leg. 10** | 60 | 0,9 | 0,8 | 1 | - | 0,8 | 0,12 | 36,38 |

Des Weiteren weisen die aus Leg. 1, Leg. 2, Leg. 6 und Leg. 7 resultierenden Legierungsprodukte die Phasenausscheidungen erster Art auf, während für Leg. 5 und Leg. 10 die Phasenausscheidungen zweiter Art im Vordergrund stehen sind. Für Leg. 3, Leg. 4, Leg. 8 und Leg. 9 liegen beide Phasenausscheidungen vor.

In der Tabelle 2 sind Temperaturangaben für das Schmelzen der jeweiligen Legierungszusammensetzungen gelistet, wobei die Liquidustemperaturen bzw. Schmelzintervalle erfasst sind. Nach dem Schmelzen erfolgte das Gießen mittels Strangguss.

**Tabelle 2**

| | **Liquidustemperatur [°C]** |
|---|---|
| **Leg. 1** | 900 |
| **Leg. 2** | 890 |
| **Leg. 3** | 910 |
| **Leg. 4** | 880 |
| **Leg. 5** | 920 |
| **Leg. 6** | 800 - 890 |
| **Leg. 7** | 790 - 880 |
| **Leg. 8** | 800 - 890 |
| **Leg. 9** | 810 - 870 |
| **Leg. 10** | 860 - 890 |

Aus den in der nachfolgenden Tabelle 3 aufgelisteten Untersuchungsergebnissen wird die gute Warmumformbarkeit der erfindungsgemäßen Kupfer-Zink-Legierung anhand der Temperatur, oberhalb der der β-Phasenanteil ≥ 30 Vol.-% beträgt, deutlich. Die Angaben stellen Mindesttemperaturen dar, wobei die für die Warmumformung angewandten Umformtemperaturen typischerweise höher liegen und bevorzugt über 500°C für Schmieden und 650°C für das Strangpressen gewählt werden.

**Tabelle 3**

| | **Mindesttemperatur [°C] für β-Phasenanteil ≥ 30 Vol.-%** |
|---|---|
| **Leg. 1** | 350 |
| **Leg. 2** | 300 |
| **Leg. 3** | 380 |
| **Leg. 4** | 150 |
| **Leg. 5** | 350 |
| **Leg. 6** | 430 |
| **Leg. 7** | 410 |
| **Leg. 8** | 510 |
| **Leg. 9** | 350 |
| **Leg. 10** | 500 |

Die gute Warmumformbarkeit stellt sich bereits bei relativ geringen Umformtemperaturen ein. In der praktischen Anwendung wird man in aller Regel den Warmumformvorgang mit einer Temperatur durchführen, die oberhalb der in der Tabelle 3 für die einzelnen Legierungen genannten liegt. Dennoch ist eine hinreichende Warmumformung auch bereits bei diesen Temperaturen möglich.

Nach dem Schmelzen der Legierungsbestandteile und dem Gießen, wird die Warmumformung für die untersuchten Ausführungsbeispiele mittels Strangpressen ausgeführt. Tabelle 4 zeigt die nach der Warmumformung vorliegenden mechanischen Eigenschaften des Legierungsproduktes:

**Tabelle 4**

| | **0,2%-Dehngrenze [Mpa]** | **Zugfestigkeit [Mpa]** | **Bruchdehnung [%]** | **Brinellhärte HBW** |
|---|---|---|---|---|
| **Leg. 1** | 290 | 670 | 10 | 160 |
| **Leg. 2** | 260 | 590 | 20 | 140 |
| **Leg. 3** | 270 | 580 | 20 | 140 |
| **Leg. 4** | 250 | 600 | 20 | 150 |
| **Leg. 5** | 270 | 640 | 14 | 160 |
| **Leg. 6** | 260 | 640 | 12 | 160 |
| **Leg. 7** | 240 | 550 | 21 | 140 |
| **Leg. 8** | 240 | 540 | 21 | 140 |
| **Leg. 9** | 230 | 560 | 22 | 140 |
| **Leg. 10** | 240 | 560 | 21 | 140 |

Für das Kaltumformen wird der in der nachfolgenden Tabelle 5 angeführte α-Phasenanteil mit oder ohne einen Zwischenglühschritt eingestellt. Insbesondere für die zur zweiten Variante gehörenden Ausführungsbeispiele ist der nach dem Strangpressen resultierende α-Phasenanteil bereits so hoch, dass ohne oder allenfalls mit einem verkürzten Zwischenglühen gearbeitet werden kann. Für die Kupfer-Zink-Legierung der ersten Variante kann für das Zwischenglühen eine Temperaturbehandlung zwischen 400 und 500°C für 3 bis 6 Stunden ausgeführt werden.

**Tabelle 5**

| | **α-Phasenanteil [Vol.-%] für die Kaltumformung** |
|---|---|
| **Leg. 1** | 25 |
| **Leg. 2** | 25 |
| **Leg. 3** | 30 - 35 |
| **Leg. 4** | 15 |
| **Leg. 5** | 40 |
| **Leg. 6** | 40 |
| **Leg. 7** | 40 |
| **Leg. 8** | 40 |
| **Leg. 9** | 30 - 35 |
| **Leg. 10** | 50 |

In Tabelle 6 sind die nach dem Kaltverformen mit der jeweils angegebenen prozentualen Verformung und einem Entspannungsglühen resultierenden mechanischen Eigenschaften des Legierungsprodukts aufgelistet. Dabei zeigt der Vergleich zur Normlegierung CuZn35Ni3Mn2AlPb (Werkstoffnummer CW710R nach DIN EN 1412), dass insbesondere eine verbesserte Zugfestigkeit und eine Anhebung der Dehngrenze erreicht werden. Letztere ist wesentlich für die mikroplastische Verformung und damit die Verschleißfestigkeit.

**Tabelle 6**

| **Gew.-%** | **prozentu-ale Verfor-mung [%]** | **0,2%-Dehngrenze [Mpa]** | **Zugfestigkeit [Mpa]** | **Bruchdehnung [%]** | **Brinellhärte HBW** |
|---|---|---|---|---|---|
| **Leg. 1** | 9 | 420 | 750 | 9 | 200 |
| **Leg. 2** | 18 | 450 | 700 | 18 | 190 |
| **Leg. 3** | 18 | 460 | 680 | 18 | 180 |
| **Leg. 4** | 18 | 440 | 710 | 18 | 190 |
| **Leg. 5** | 12 | 440 | 740 | 13 | 200 |
| **Leg. 6** | 10 | 400 | 730 | 11 | 200 |
| **Leg. 7** | 18 | 420 | 660 | 19 | 180 |
| **Leg. 8** | 18 | 410 | 650 | 19 | 175 |
| **Leg. 9** | 18 | 420 | 680 | 20 | 180 |
| **Leg. 10** | 18 | 440 | 670 | 19 | 180 |
| **CW710R** | - | 300 - 400 | 490 - 550 | 10 - 20 | 190 - 240 |

## Patentansprüche

1. Legierungsprodukt hergestellt aus einer bleifreien Kupfer-Zink-Legierung, bestehend aus (Angaben in Gew.-%):
| | |
|---|---|
| Cu: | 57 bis 63 %, |
| Al: | 0,8 bis 1,9 %, |
| Mn: | 0,7 bis 1,6 %, |
| Ni: | 0,8 bis 1,2 %, |
| Si: max. 1,0 % und/oder P: max. | 0,2 %, |
| wahlweise Sn: | max. 1,0 %, |
| Pb: | max. 0,1 % |
Rest Zn und unvermeidbare Verunreinigungen, und
wobei das Legierungsprodukt nach einer thermischen Behandlung der Kupfer-Zink-Legierung ein Legierungsgefüge aufweist, das aus β-Gefüge oder einem primären β-Gefüge mit α-Phasenanteilen besteht, und
wobei im Legierungsgefüge Phasenausscheidungen erster Art mit Silizium und Mangan enthaltenden Verbindungen und/oder Phasenausscheidungen zweiter Art mit Phosphor, Mangan und Nickel enthaltenden Verbindungen vorliegen.

2. Legierungsprodukt nach Anspruch 1, **dadurch gekennzeichnet, dass** die thermische Behandlung eine Warmumformung und/oder eine Kaltumformung umfasst.

3. Legierungsprodukt nach Anspruch 1 oder 2, **dadurch gekennzeichnet, dass** die thermische Behandlung ein Zwischenglühen vor einer Kaltumformung und/oder ein abschließendes Entspannungsglühen umfasst.

4. Legierungsprodukt nach einem der vorausgehenden Ansprüche, **dadurch gekennzeichnet, dass** der Kupfergehalt auf 58 bis 62 Gew.-% beschränkt ist.

5. Legierungsprodukt nach einem der vorausgehenden Ansprüche, **dadurch gekennzeichnet, dass** der Aluminiumgehalt 0,85 bis 1,85 Gew.-% beträgt.

6. Legierungsprodukt nach einem der vorausgehenden Ansprüche, **dadurch gekennzeichnet, dass** der Mangangehalt 0,8 bis 1,5 Gew.-% beträgt.

7. Legierungsprodukt nach einem der vorausgehenden Ansprüche, **dadurch gekennzeichnet, dass** der Aluminiumgehalt ≥ 1,45 Gew.-% und der Mangangehalt ≥ 0,95 Gew.-% betragen.

8. Legierungsprodukt nach einem der Ansprüche 1 - 6, **dadurch gekennzeichnet, dass** der Aluminiumgehalt ≤ 1,25 Gew.-% und der Mangangehalt ≤ 0,85 Gew.-% betragen.

9. Legierungsprodukt nach einem der vorausgehenden Ansprüche, **dadurch gekennzeichnet, dass** der Nickelgehalt 0,9 bis 1,1 Gew.-% beträgt.

10. Legierungsprodukt nach einem der vorausgehenden Ansprüche, **dadurch gekennzeichnet, dass** der Siliziumgehalt 0,05 bis 0,9 Gew.-% beträgt.

11. Legierungsprodukt nach einem der vorausgehenden Ansprüche, **dadurch gekennzeichnet, dass** der Phosphorgehalt 0,005 bis 0,15 Gew.-% beträgt.

12. Legierungsprodukt nach einem der vorausgehenden Ansprüche, **dadurch gekennzeichnet, dass** der Zinngehalt 0,05 bis 0,9 Gew.-% beträgt.

13. Legierungsproduktnach einem der vorausgehenden Ansprüche, **dadurch gekennzeichnet, dass** im Legierungsgefüge sowohl die Phasenausscheidungen erster Art mit Silizium und Mangan enthaltenden Verbindungen als auch die Phasenausscheidungen zweiter Art mit Phosphor, Mangan und Nickel enthaltenden Verbindungen vorliegen.

14. Legierungsprodukt nach einem der vorausgehenden Ansprüche, **dadurch gekennzeichnet, dass** die Kupfer-Zink-Legierung einen β-Phasenanteil von ≥ 30 Vol.-% für eine Temperatur oberhalb von 550°C und bevorzugt oberhalb von 400°C aufweist.

15. Verfahren zur Herstellung eines Legierungsprodukts nach einem der vorausgehenden Ansprüche, **dadurch gekennzeichnet, dass** nach dem Schmelzen der Bestandteile der Kupfer-Zink-Legierung und dem Gießen eine thermische Behandlung ausgeführt wird, die eine Warmumformung und/oder eine Kaltumformung umfasst,
wobei die Kupfer-Zink-Legierung für die Warmumformung einen β-Phasenanteil von ≥ 30 Vol.-% für eine Temperatur oberhalb von 550°C und bevorzugt oberhalb von 400°C aufweist, und
wobei die Kupfer-Zink-Legierung vor der Kaltumformung einen α-Phasenanteil von 10 - 50% Vol.-% und bevorzugt von 25 - 40 Vol.-% aufweist und die Kaltumformung mit einer prozentualen Verformung von 7 bis 25 % und bevorzugt von 9 bis 18 % ausgeführt wird.

16. Verfahren nach Anspruch 15, **dadurch gekennzeichnet, dass** nach der Kaltumformung ein Entspannungsglühen ausgeführt wird.
